(19) Europäisches Patentamt
European Patent Office
Office européen des brevets

(11) **EP 0 947 412 B1**

(12) **EUROPÄISCHE PATENTSCHRIFT**

(45) Veröffentlichungstag und Bekanntmachung des Hinweises auf die Patenterteilung:
**02.02.2005 Patentblatt 2005/05**

(51) Int Cl.$^7$: **B62D 6/00**
// B62D101:00, B62D113:00, B62D151:00

(21) Anmeldenummer: **99104116.1**

(22) Anmeldetag: **02.03.1999**

(54) **Steuereinrichtung zur Beeinflussung der Fahrdynamik eines vierrädrigen Fahrzeugs**

Control device for influencing the drive dynamics of a four-wheeled vehicle

Dispositif de commande pour influencer la dynamique de conduite d'un véhicule à quatre roues

(84) Benannte Vertragsstaaten:
**DE ES FR GB IT**

(30) Priorität: **28.03.1998 DE 19813945**

(43) Veröffentlichungstag der Anmeldung:
**06.10.1999 Patentblatt 1999/40**

(73) Patentinhaber: **DaimlerChrysler AG**
**70567 Stuttgart (DE)**

(72) Erfinder: **Goetz, Jochen**
**71131 Jettingen (DE)**

(56) Entgegenhaltungen:
DE-A- 4 139 009    US-A- 4 706 771
US-A- 4 767 588    US-A- 5 208 751

• **PATENT ABSTRACTS OF JAPAN vol. 018, no. 119 (M-1567), 25. Februar 1994 (1994-02-25) & JP 05 310142 A (FUJI HEAVY IND LTD), 22. November 1993 (1993-11-22)**

**Beschreibung**

Die Erfindung betrifft eine Steuereinrichtung zur Beeinflussung der Fahrdynamik eines vierrädrigen Fahrzeugs nach dem Oberbedes Anspruches 1.

Aus der DE 41 39 009 C1 ist eine Steuereinrichtung für eine Vierradlenkung für ein Kraftfahrzeug bekannt, die Stelleinrichtungen für die Vorderräder und die Hinterräder umfaßt und Steuersignale erzeugt, welche die Stelleinrichtungen gemäß vorgegebener Lenkgesetze beaufschlagen. Die angegebenen Lenkgesetze sollen eine Beeinflussung des Gierverhaltens und des Querbeschleunigungsverhaltens des Fahrzeugs ermöglichen mit dem Ziel, ein optimales Ansprechverhalten bezüglich dem Schlupfwinkelaufbau beim Anlenken zu erzeugen.

Diese Steuereinrichtung hat den Nachteil, daß der Lenkeingriff an den Hinterrädern einen hohen konstruktiven Aufwand erfordert, dessen Vorteile üblicherweise nur in fahrdynamischen Grenzsituationen zum Tragen kommen. Eine gezielte Beeinflussung des Fahrverhaltens unterhalb des Grenzbereichs, insbesondere eine getrennte Beeinflussung des Gierverhaltens und des Querbeschleunigungsverhaltens, ist jedoch nicht möglich.

Der Erfindung liegt das Problem zugrunde, die querdynamischen Eigenschaften eines Fahrzeugs im Normalfahrbereich mit geringem konstruktiven Aufwand einzustellen und abzustimmen.

Dieses Problem wird erfindungsgemäß mit den Merkmalen des Anspruches 1 gelöst.

Die erfindungsgemäße Steuereinrichtung ermöglicht es, Spurwinkeländerungen an den Vorderrädern und den Hinterrädern, die ein bestimmtes, gewünschtes dynamisches Fahrverhalten bewirken, zu ermitteln und durchzuführen. Das Fahrverhalten in bezug auf die Querdynamik des Fahrzeugs kann nach objektiven Kriterien der Fahrzeugbewertung vorgegeben und anhand dieser Kriterien die Spurwinkel an den Vorder- und Hinterrädern eingestellt werden.

Die vorzugebende Zielwerte als Kriterien der Fahrzeugbewertung sind die Lenkübersetzung, der Eigenlenkgradient und der Schwimmwinkelgradient, die als Sollsignale der Steuereinrichtung zugeführt werden. Aus diesen Zielwerten ermittelt die Steuereinrichtung in Abhängigkeit der aktuellen Fahrzeuggeschwindigkeit und des aktuellen Lenkwinkels sowie weiterer fahrzeugspezifischer Parameter Steuersignale, mit denen die Stelleinrichtungen an den Vorder- und Hinterrädern beaufschlagt werden. Die Steuersignale repräsentieren Zusatzspurwinkel zur Beeinflussung des dynamischen Fahrverhaltens, die relativ zu den Spurwinkeln der Basisabstimmung ermittelt und zu diesen aufaddiert werden. Die Fahrzeuggeschwindigkeit und der Lenkwinkel können über Sensoren aufgenommen werden.

Die Lenkübersetzung, der Eigenlenkgradient und der Schwimmwinkelgradient als vorzugebende Sollgrößen werden fahrzeugspezifisch und nach gewünschtem Fahrverhalten ausgewählt. Auf der Grundlage von Erfahrungswerten kann beispielsweise zur Einstellung eines "sportlichen" Fahrverhaltens des Fahrzeugs ein kleiner Schwimmwinkelgradient vorgegeben werden, wodurch Gierbewegungen des Fahrzeugs minimiert werden.

Die zu ermittelnden Zusatzspurwinkel liegen als stationäre Steuersignale vor, mit denen die Spurwinkel jeweils für die Vorderräder und die Hinterräder während des Fahrbetriebs in Abhängigkeit des Lenkwinkels und der Fahrzeuggeschwindigkeit eingestellt werden. Bereits die Einstellung der stationären Spurwinkel bewirkt eine Beeinflussung des dynamischen Fahrverhaltens in Hinblick auf die Giergeschwindigkeit und die Querbeschleunigung des Fahrzeugs.

Zusätzlich zur stationären Einstellung ist gemäß einer vorteilhaften Weiterbildung auch eine dynamische Abstimmung des Spurwinkels mit zeitlich veränderlichen Steuersignalen während des Fahrbetriebs durchführbar. Bei der dynamischen Abstimmung werden die stationären Zusatzspurwinkel dynamisiert, so daß die Zusatzspurwinkel einem zeitabhängigen Einschwingverlauf folgen. Bevorzugt wird eine Beziehung zwischen dem zeitlich veränderlichen Verlauf der Zusatzspurwinkel und dem zeitlich veränderlichen Verlauf des vorderen bzw. hinteren Zusatzschwimmwinkels und eines dynamisierten Zusatzeigenlenkwinkels hergestellt; die Dynamik wird mit Hilfe einer Laplace-Transformation ausgedrückt, wobei bei einem stationären Verlauf die dynamischen Glieder wegfallen und die Beziehungen für die stationären und die dynamischen Zusatzspurwinkel identisch sind.

Über einen vorgebbaren Querbeschleunigungs-Verstärkungsfaktor kann der Verlauf des Frequenzgangs der Querbeschleunigung beeinflußt werden, insbesondere im Bereich zwischen 0 bis etwa 2 Hz. Wird der Verstärkungsfaktor größer Null gewählt, kann ein fahrdynamisch kritisches Abfallen der Querbeschleunigungs-Verstärkung in diesem Frequenzbereich vermieden werden. Wird der Verstärkungsfaktor kleiner Null gewählt, kann die Querbeschleunigungs-Verstärkung abgesenkt werden.

Weiterhin kann durch eine geeignete Wahl der die Dynamik beeinflussenden Faktoren erreicht werden, daß der Giergeschwindigkeitsfrequenzgang unverändert bleibt und somit den gleichen Verlauf behält wie in der Grundabstimmung ohne Beaufschlagung mit einem stationären oder dynamischen Zusatzspurwinkel. Veränderungen im Frequenzgang der Giergeschwindigkeit, die durch einen zeitlich veränderlichen Verlauf des Zusatzschwimmwinkels verursacht werden, können kompensiert werden.

Der Gierfrequenzgang kann in einer bevorzugten Ausführung unmittelbar durch die Vorgabe der Giereigenfrequenz und der Gierdämpfung beeinflußt werden.

Die dynamische Abstimmung der Zusatzspurwinkel ist unabhängig von der stationären Einstellung möglich. In einer ersten Ausbaustufe kann zunächst nur stationär eingestellt werden, in einer zweiten Ausbaustufe anschließend dynamisch abgestimmt werden.

Weitere Vorteile und zweckmäßige Ausführungsformen sind den weiteren Ansprüchen, der Figurenbeschreibung und den Zeichnungen zu entnehmen. Es zeigen:

Fig. 1 eine schematische Darstellung eines Fahrzeugs mit einer Steuerungseinrichtung,

Fig. 2 die Struktur der Steuerungseinrichtung mit nachgeschalteter Stelleinrichtung.

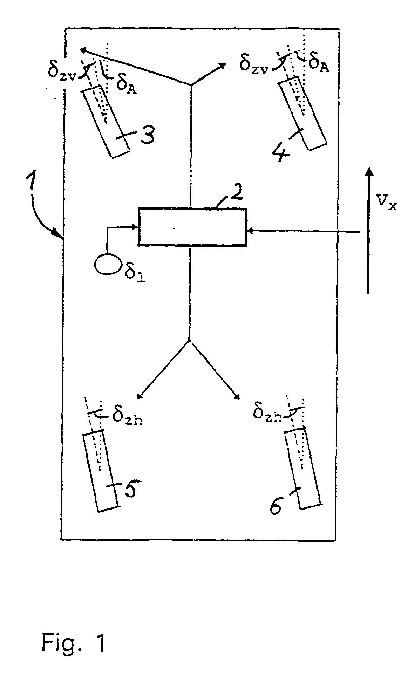

Das in Fig. 1 dargestellte vierrädrige, über die Vorderräder 3, 4 lenkbare Kraftfahrzeug 1 weist eine Lenkeinrichtung zur Vorgabe eines Lenkwinkels $\delta_l$ auf, der gemäß einer gegebenen Lenkübersetzung $il_B$ in einen Spurwinkel $\delta_A$ der Vorderräder 3, 4 des Fahrzeugs 1 umgesetzt wird. Zur Beeinflussung der Fahrdynamik des Fahrzeugs, insbesondere der Querdynamik, ist eine Steuerungseinrichtung 2 vorgesehen, die in Abhängigkeit des Lenkwinkels $\delta_l$ und der Fahrzeug-Längsgeschwindigkeit $v_x$ Steuersignale für Stelleinrichtungen erzeugt, welche den Steuersignalen entsprechende Zusatzspurwinkel $\delta_{zv}$ und $\delta_{zh}$ an den Vorderrädern 3, 4 bzw. den Hinterrädern 5, 6 einstellen. Über die Zusatzspurwinkel $\delta_{zv}$, $\delta_{zh}$ kann die Querdynamik des Fahrzeugs 1 nach objektiven Kriterien der Fahrzeugbewertung eingestellt werden.

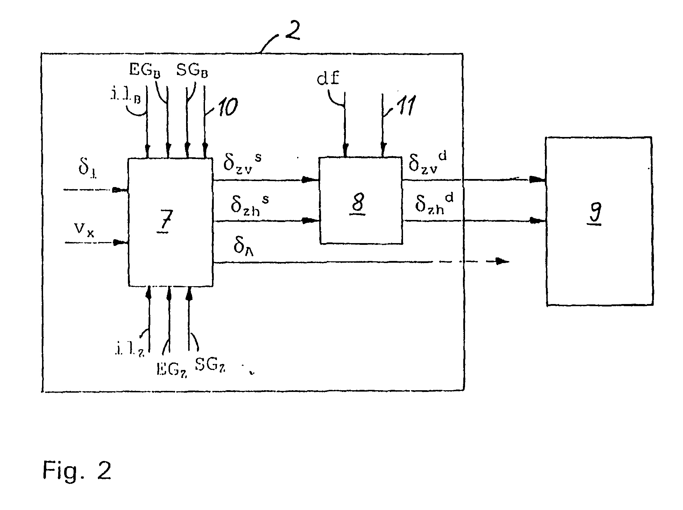

Fig. 2 zeigt die Steuereinrichtung 2 mit nachgeschalteter Stelleinrichtung 9 zur Einstellung der Zusatzspurwinkel $\delta_{zv}$, $\delta_{zh}$ an den Fahrzeugrädern. Die nur schematisch dargestellte Stelleinrichtung 9 beaufschlagt sowohl die Vorderräder als auch die Hinterräder des Fahrzeugs. Die Steuereinrichtung 2 umfaßt eine erste Verarbeitungseinheit 7 zur Erzeugung stationärer Zusatzspurwinkel $\delta_{zv}{}^s$, $\delta_{zh}{}^s$ entsprechender Steuersignale und eine optional eingesetzte zweite Verarbeitungseinheit 8 zur Erzeugung dynamischer Zusatzspurwinkel $\delta_{zv}{}^d$, $\delta_{zh}{}^d$ entsprechender Steuersignale, die der Stelleinrichtung 9 zugeführt werden. Gegebenenfalls kann in der Steuereinrichtung 2 auch der Spurwinkel $\delta_A$ aus dem Lenkwinkel $\delta_l$ und der Lenkübersetzung ermittelt und als Steuersignal der Stelleinrichtung 9 zugeführt werden.

Die erste Verarbeitungseinheit 7 der Steuereinrichtung 2 zur Erzeugung stationärer Zusatzspurwinkel $\delta_{zv}{}^s$, $\delta_{zh}{}^s$ verarbeitet als Eingangssignale den Lenkwinkel $\delta_l$ und die Längsgeschwindigkeit $v_x$. Weiterhin liegen an der ersten Verarbeitungseinheit 7 in Signalform Basiswerte $il_B$, $EG_B$ und $SG_B$ für die Lenkübersetzung, den Eigenlenkgradienten und den Schwimmwinkelgradienten an, die durch die Grundabstimmung des Fahrzeugs konstruktiv bestimmt sind und in wesentlichem Maße die Querdynamik des Fahrzeugs beeinflussen. Um ein geändertes Fahrverhalten in bezug auf die Querdynamik des Fahrzeugs aufzuprägen, können neue Zielwerte $il_Z$, $EG_Z$ und $SG_Z$ für die Lenkübersetzung, den Eigenlenkgradienten und den Schwimmwinkelgradienten vorgegeben werden, die in Signalform der Verarbeitungseinheit 7 zugeführt werden. Die Verarbeitungseinheit 7 erzeugt aus den Informationen Lenkwinkel $\delta_l$, Längsgeschwindigkeit $v_x$, Basiswerte/Zielwerte $il_B$, $EG_B$, $SG_B$/$il_Z$, $EG_Z$, $SG_Z$ sowie weiterer fahrzeugspezifischer Parameter 10, die ebenfalls in Signalform der Verarbeitungseinheit 7 zugeführt werden, Steuersignale, welche stationäre Zusatzspurwinkel $\delta_{zv}{}^s$, $\delta_{zh}{}^s$ für die Vorder- und Hinterräder repräsentieren.

In einem ersten Schritt wird in der Verarbeitungseinheit 7 die Querbeschleunigung $a_y$ gemäß der Beziehung

$$a_y = \delta_l / il_Z * v_x{}^2 / (v_x{}^2 * EG_Z + lr)$$

ermittele, wobei lr den Radstand bedeutet, der als Parameter 10 in Signalform der Verarbeitungseinheit 7 zugeführt wird. Aus der Querbeschleunigung $a_y$ berechnet sich der stationäre Zusatzschwimmwinkel $\beta^s$ nach der Gleichung

$$\beta^s = a_y * (SG_B - SG_Z) .$$

Hieraus werden die stationären Zusatzspurwinkel $\delta_{zh}{}^s$, $\delta_{zv}{}^s$ hinten und vorn nach den Beziehungen

$$\delta_{zh}{}^s = \beta^s ,$$

$$\delta_{zv}{}^s = \beta^s + \delta_{zel}{}^s$$

mit dem stationären Zusatzeigenlenkwinkel

$$\delta_{zel}{}^s = \delta_l/il_Z * ((v_x{}^2 * EG_B + lr) / (v_x{}^2 * EG_Z + lr)) - \delta_l/il_B$$

berechnet. Die stationären Zusatzspurwinkel $\delta_{zh}{}^s$, $\delta_{zv}{}^s$ hinten und vorn werden als Steuersignale der Stelleinrichtung 9 zugeführt und im Fahrbetrieb in Abhängigkeit des aktuellen Lenkwinkels $\delta_l$ und der aktuellen Fahrgeschwindigkeit

$v_x$ eingestellt.

Die Basiswerte $il_B$, $EG_B$ und $SG_B$ für die Lenkübersetzung, den Eigenlenkgradienten und den Schwimmwinkelgradienten können entweder als Eingangssignale der Steuereinrichtung 2 zugeführt oder in einer Speichereinheit in der Steuereinrichtung abgespeichert sein, wobei die Speichereinheit mit der Verarbeitungseinheit 7 kommuniziert.

In der der ersten Verarbeitungseinheit 7 nachgeschalteten zweiten Verarbeitungseinheit 8 werden die die Zusatzspurwinkel repräsentierenden Steuersignale dynamisiert. Hierzu werden in einer zunächst intern in der Verarbeitungseinheit 8 Parameter nv, nkv, welche zur Beschreibung des dynamischen Verhaltens des dynamischen Zusatzspurwinkels vorn $\delta_{zv}^d$ benötigt werden, sowie Parameter nh, nkh, welche zur Beschreibung des dynamischen Verhaltens des dynamischen Zusatzspurwinkels hinten $\delta_{zh}^d$ benötigt werden, errechnet.

Der Parameter nv bestimmt sich in Abhängigkeit der Längsgeschwindigkeit $v_x$ und des Basiswerts $SG_B$ des Schwimmwinkelgradienten nach der Gleichung

$$nv = v_x * SG_B .$$

Für die Berechnung des Parameters nkv wird vorab ein wählbarer Querbeschleunigungs-Verstärkungsfaktor df als Eingangssignal der Verarbeitungseinheit 8 zugeführt, über den der Verlauf des Frequenzgangs der Querbeschleunigung im Bereich zwischen 0 bis etwa 2 Hz beeinflußt werden kann. Der Verstärkungsfaktor df kann Werte größer Null, gleich Null oder kleiner Null annehmen.

Ist der Verstärkungsfaktor gleich Null, bleibt der Frequenzgang der Querbeschleunigung unbeeinflußt. Ist der Verstärkungsfaktor kleiner Null, wird die Querbeschleunigungs-Verstärkung abgesenkt. Ist der Verstärkungsfaktor größer Null, wird die Querbeschleunigungs-Verstärkung erhöht.

Hiermit berechnet sich der Parameter nkv in einer ersten zweckmäßigen Ausführung gemäß der Beziehung

$$nkv = v_x * (SG_B + df)$$

in Abhängigkeit der Längsgeschwindigkeit $v_x$, des Basiswerts $SG_B$ des Schwimmwinkelgradienten sowie des Querbeschleunigungs-Verstärkungsfaktors df, wobei in dieser Ausführung eine Feinabstimmung des Querbeschleunigungsfrequenzgangs ohne Kompensation der Änderungen im Giergeschwindigkeitsfrequenzgang erfolgt.

In einer anderen vorteilhaften Ausführung bestimmt sich der Parameter nkv gemäß

$$nkv = v_x * (EG_B + SG_B + df)$$

zusätzlich in Abhängigkeit des Basiswertes $EG_B$ des Eigenlenkgradienten. In dieser Ausführung können Veränderungen im Frequenzgang der Giergeschwindigkeit kompensiert werden.

Die Parameter nh, nkh berechnen sich für beide Ausführungen einheitlich gemäß

$$nh = v_x * (EG_B + SG_B) ,$$

$$nkh = v_x * (EG_B + SG_B + df).$$

Nach der Ermittlung der Parameter nv, nkv und nh, nkh werden in der Verarbeitungseinheit 8 werden dynamische Zusatzschwimmwinkel vorn und hinten $\beta_v^d$, $\beta_h^d$ in Abhängigkeit des aus der Verarbeitungseinheit 7 bekannten stationären Zusatzschwimmwinkels $\beta^s$ als Differentialgleichung in Laplace-Darstellung mit der Laplace-Variablen s ermittelt:

$$\beta_v^d = (1 + nkv * s) / (1 + nv * s) * \beta^s ,$$

$$\beta_h^d = (1 + nkh * s) / (1 + nh * s) * \beta^s .$$

Die dynamisierten Zusatzspurwinkel $\delta_{zv}^d$, $\delta_{zh}^d$ vorn und hinten werden gemäß den Beziehungen

$$\delta_{zv}{}^d = \beta_v{}^d + \delta_{zel}{}^d \, ,$$

$$\delta_{zh}{}^d = \beta_h{}^d$$

ermittelt, wobei $\delta_{zel}{}^d$ einen dynamischen Zusatzeigenlenkwinkel bezeichnet, der sich in Abhängigkeit des Lenkwinkels $\delta_l$ und des Basiswerts $il_B$ der Lenkübersetzung nach

$$\delta_{zel}{}^d = \delta_{Sub} - \delta_l / il_B$$

unter Verwendung der Substitutionsvariablen $\delta_{Sub}$ berechnet, die als Differentialgleichung in der Laplace-Transformation

$$\delta_{Sub} = \frac{(s^2/\omega_{0B}{}^2 + 2*D_B/\omega_{0B}*s + 1)}{(s^2/\omega_{0Z}{}^2 + 2*D_Z/\omega_{0Z}*s + 1)} * (\delta_l/il_B + \delta_{zel}{}^s)$$

darstellbar ist. Die Substitutionsvariablen $\delta_{Sub}$ hängt vom Lenkwinkel $\delta_l$, dem Basiswert $il_B$ der Lenkübersetzung, dem aus der ersten Verarbeitungseinheit 7 bekannten stationären Zusatzeigenlenkwinkel $\delta_{zel}{}^s$ und außerdem von Basiswerten $\omega_{0B}$, $D_B$ für die Giereigenfrequenz und die Gierdämpfung, welche der Grundabstimmung des Fahrzeugs entsprechen, und vorzugebenden Zielwerten $\omega_{0Z}$, $D_Z$ für die Giereigenfrequenz und die Gierdämpfung ab. Die Zielwerte $\omega_{0Z}$, $D_Z$ für die Giereigenfrequenz und die Gierdämpfung können als Parameter 11 als Eingangssignal der zweiten Verarbeitungseinheit 8 zugeführt werden. Die Basiswerte $\omega_{0B}$, $D_B$ für die ungedämpfte Giereigenfrequenz und die Gierdämpfung werden aus den Beziehungen

$$\omega_{0B} = a + b/v_x{}^2 \, ,$$

$$D = c/(v_x * \omega_{0B})$$

ermittelt, wobei a, b und c Parameter sind, die aus Meßkurven der Giereigenfrequenz für zwei Geschwindigkeiten, beispielsweise 80 km/h und 120 km/h, zu bestimmen sind.

Im stationären Fall, das heißt für s = 0, sind die Beziehungen für die dynamisierten Zusatzspurwinkel $\delta_{zv}{}^d$, $\delta_{zh}{}^d$ identisch mit den Beziehungen für die stationären Zusatzspurwinkel $\delta_{zv}{}^s$, $\delta_{zh}{}^s$.

Mit der erfindungsgemäßen Steuerungseinrichtung kann die Querdynamik über Software abgestimmt werden. Dies reduziert die Notwendigkeit, mechanische Elemente auf ein gewünschtes dynamisches Fahrzeugverhalten anzupassen.

**Patentansprüche**

1.  Steuereinrichtung zur Beeinflussung der Fahrdynamik eines vierrädrigen Fahrzeugs, wobei die Fahrzeug-Längsgeschwindigkeit ($v_x$) und der Lenkwinkel ($\delta_l$) als Eingangssignale der Steuereinrichtung (2) zuführbar sind und Steuersignale erzeugbar sind, welche Stelleinrichtungen (9) zur Einstellung der Fahrzeugräder (3, 4, 5, 6) zuführbar sind,
    **dadurch gekennzeichnet,**
    **daß** zur Einstellung eines gewünschten Fahrverhaltens Zielwerte für die Lenkübersetzung ($il_Z$), den Eigenlenkgradienten ($EG_Z$) und den Schwimmwinkelgradienten ($SG_Z$) als Sollsignale vorgebbar sind,
    **daß** die Querbeschleunigung ($a_y$) des Fahrzeugs der Beziehung

$$a_y = \delta_l/il_Z * v_x{}^2 / (v_x{}^2 * EG_Z + lr) \, ,$$

    entspricht, worin $lr$ den Radstand bezeichnet,
    **daß** ein stationärer Zusatzschwimmwinkel ($\beta^s$) der Beziehung

$$\beta^s = a_y * (SG_B - SG_Z)$$

entspricht, worin $SG_B$ einen bekannten Basiswert des Schwimmwinkelgradienten bezeichnet,
und **daß** stationäre Zusatzspurwinkel ($\delta_{zh}^s$, $\delta_{zv}^s$) hinten und vorn den Beziehungen

$$\delta_{zh}^s = \beta^s$$

$$\delta_{zv}^s = \beta^s + \delta_{zel}^s$$

mit dem stationären Zusatzeigenlenkwinkel

$$\delta_{zel}^s = \delta_l/il_Z * ((v_x^2 * EG_B + lr) / (v_x^2 * EG_Z + lr)) - \delta_l/il_B$$

entsprechen, worin $il_B$ einen bekannten Basiswert der Lenkübersetzung und $EG_B$ einen bekannten Basiswert des Eigenlenkgradienten bezeichnet,
wobei die den Stelleinrichtungen (9) zuführbaren Steuersignale die stationären Zusatzspurwinkel ($\delta_{zh}^s$, $\delta_{zv}^s$) repräsentieren.

2. Steuereinrichtung nach Anspruch 1,
   **dadurch gekennzeichnet,**
   **daß** zur Einstellung eines gewünschten dynamischen Fahrverhaltens Steuersignale erzeugbar sind, die einen dynamisierten Zusatzspurwinkel ($\delta_{zh}^d$, $\delta_{zv}^d$) hinten und vorn repräsentieren.

3. Steuereinrichtung nach Anspruch 2,
   **dadurch gekennzeichnet,**
   **daß** die dynamisierten Zusatzspurwinkel ($\delta_{zh}^d$, $\delta_{zv}^d$) hinten und vorn den Beziehungen

$$\delta_{zh}^d = \beta_h^d$$

$$\delta_{zv}^d = \beta_v^d + \delta_{zel}^d$$

entsprechen, worin

$\beta_h^d$      den dynamischen Zusatzschwimmwinkel hinten,
$\beta_v^d$      den dynamischen Zusatzschwimmwinkel vorne und
$\delta_{zel}^d$      den dynamischen Zusatzeigenlenkwinkel

bezeichnet.

4. Steuereinrichtung nach Anspruch 3,
   **dadurch gekennzeichnet,**
   **daß** der dynamische Zusatzschwimmwinkel hinten ($\beta_h^d$) gemäß der Laplace-Transformation

$$\beta_h^d = (1 + nkh * s) / (1 + nh * s) * \beta^s$$

in Abhängigkeit des stationären Zusatzschwimmwinkels ($\beta^s$) ermittelbar ist, worin

s      die Laplace-Variable und
nkh, nh      von der Längsgeschwindigkeit $v_x$ abhängige Parameter

sind.

5. Steuereinrichtung nach Anspruch 4,
   **dadurch gekennzeichnet,**
   **daß** der Parameter nkh gemäß der Beziehung

$$nkh = v_x * (EG_B + SG_B + df)$$

in Abhängigkeit der Basiswerte ($EG_B$, $SG_B$) des Eigenlenkgradienten und des Schwimmwinkelgradienten und eines als Sollsignal vorgebbaren Querbeschleunigungs-Verstärkungsfaktors (df) ermittelbar ist.

6. Steuereinrichtung nach Anspruch 4 oder 5,
   **dadurch gekennzeichnet,**
   **daß** der Parameter nh gemäß der Beziehung

$$nh = v_x * (EG_B + SG_B)$$

in Abhängigkeit der Basiswerte ($EG_B$, $SG_B$) des Eigenlenkgradienten und des Schwimmwinkelgradienten ermittelbar ist.

7. Steuereinrichtung nach einem der Ansprüche 3 bis 6,
   **dadurch gekennzeichnet,**
   **daß** der dynamische Zusatzschwimmwinkel vorne ($\beta_v^d$) in Abhängigkeit des stationären Zusatzschwimmwinkels ($\beta^s$) der Laplace-Transformation

$$\beta_v^d = (1 + nkv * s) / (1 + nv * s) * \beta^s$$

entspricht, worin

nkv, nv    von der Längsgeschwindigkeit $v_x$ abhängige Parameter

sind.

8. Steuereinrichtung nach Anspruch 7,
   **dadurch gekennzeichnet,**
   **daß** der Parameter nkv aus der Beziehung

$$nkv = v_x * (SG_B + df)$$

in Abhängigkeit des Basiswerts ($SG_B$) des Schwimmwinkelgradienten und des vorgebbaren Querbeschleunigungs-Verstärkungsfaktors (df) ermittelbar ist.

9. Steuereinrichtung nach Anspruch 7,
   **dadurch gekennzeichnet,**
   **daß** der Parameter nkv aus der Beziehung

$$nkv = v_x * (EG_B + SG_B + df)$$

in Abhängigkeit der Basiswerte ($EG_B$, $SG_B$) des Eigenlenkgradienten und des Schwimmwinkelgradienten und des vorgebbaren Querbeschleunigungs-Verstärkungsfaktors (df) ermittelbar ist.

10. Steuereinrichtung nach einem der Ansprüche 7 bis 9,
    **dadurch gekennzeichnet,**
    **daß** der Parameter nv aus der Beziehung

$$nv = v_x * SG_B$$

in Abhängigkeit des Basiswerts ($SG_B$) des Schwimmwinkelgradienten ermittelbar ist.

**11.** Steuereinrichtung nach einem der Ansprüche 5 bis 10,
**dadurch gekennzeichnet,**
**daß** der Querbeschleunigungs-Verstärkungsfaktor (df) zur Absenkung der Querbeschleunigungs-Verstärkung kleiner Null ist.

**12.** Steuereinrichtung nach einem der Ansprüche 5 bis 10
**dadurch gekennzeichnet,**
**daß** der Querbeschleunigungs-Verstärkungsfaktor (df) zur Vermeidung eines kritischen Abfallens der Querbeschleunigungs-Verstärkung größer Null ist.

**13.** Steuereinrichtung nach einem der Ansprüche 3 bis 12,
**dadurch gekennzeichnet,**
**daß** der dynamische Zusatzeigenlenkwinkel $\delta_{zel}{}^d$ der Beziehung

$$\delta_{zel}{}^d = \delta_{Sub} - \delta_l / il_B$$

unter Verwendung der Substitutionsvariablen $\delta_{Sub}$ entspricht, welche der Laplace-Transformation

$$\delta_{Sub} = \frac{(s^2/\omega_{0B}{}^2 + 2^*D_B/\omega_{0B}{}^*s + 1)}{(s^2/\omega_{0Z}{}^2 + 2^*D_Z/\omega_{0Z}{}^*s + 1)} * (\delta_l/il_B + \delta_{zel}{}^s)$$

in Abhängigkeit des stationären Zusatzeigenlenkwinkels ($\delta_{zel}{}^s$) folgt, worin

$\omega_{0B}$     den bekannten Basiswert für die Giereigenfrequenz
$D_B$     den bekannten Basiswert für die Gierdämpfung
$\omega_{0Z}$     den einzustellenden Zielwert für die Giereigenfrequenz
$D_Z$     den einzustellenden Zielwert für die Gierdämpfung

bezeichnet.

**14.** Steuereinrichtung nach Anspruch 13,
**dadurch gekennzeichnet,**
**daß** die Basiswerte ($\omega_{0B}$, $D_B$) für die Giereigenfrequenz und die Gierdämpfung aus den Beziehungen

$$\omega_{0B} = a + b/v_x{}^2$$

$$D = c/(v_x * \omega_{0B})$$

ermittelbar sind, worin a, b und c Parameter sind, die aus Meßkurven der Giereigenfrequenz zu bestimmen sind.

**Claims**

**1.** A control device for influencing the driving dynamics of a four-wheeled vehicle, it being possible to feed the longitudinal vehicle velocity ($v_x$) and the steering angle ($\delta_1$) to the control device as input signals and it being possible to generate control signals which can be fed to adjusting devices (9) for setting the vehicle wheels (3, 4, 5, 6),
**characterised in that**
in order to set a desired driving behaviour, target values for the steering ratio ($il_z$), the self-steering gradient ($EG_Z$) and the side slip angle gradient ($SG_Z$) can be predetermined as reference values,

the transverse acceleration ($a_y$) of the vehicle corresponds to the relationship

$$a_y = \delta_1/il_z * v_x^2 / (v_x^2 * EG_Z + lr),$$

where (lr) designates the wheel base,
a stationary additional side slip angle ($\beta^s$) corresponds to the relationship

$$\beta^s = a_y * (SG_B - SG_Z),$$

where ($SG_B$) designates a known basic value for the side slip angle gradient, and rear and front stationary additional toe angles ($\delta_{zh}^s$, $\delta_{zv}^s$) correspond to the relationships

$$\delta_{zh}^s = \beta^s$$

$$\delta_{zv}^s = \beta^s + \delta_{zel}^s$$

with the stationary additional self-steering angle

$$\delta_{zel}^s = \delta_1/il_z * ((v_x^2 * EG_B + lr) / (v_x^2 * EG_Z + lr)) - \delta_1/il_B,$$

where ($il_B$) designates a known basic value for the steering ratio and ($EG_B$) designates a known basic value for the self-steering angle,
the control signals which can be fed to the adjusting devices (9) representing the stationary additional toe angles ($\delta_{zh}^s$, $\delta_{zv}^s$).

2. A control device in accordance with claim 1,
   **characterised in that**
   in order to set a desired dynamic driving behaviour it is possible to generate control signals which represent a rear and a front dynamised additional toe angle ($\delta_{zh}^d$, $\delta_{zv}^d$).

3. A control device in accordance with claim 2,
   **characterised in that**
   the rear and front dynamised additional toe angles ($\delta_{zh}^d$, $\delta_{zv}^d$) correspond to the relationships

$$\delta_{zh}^d = \beta_h^d$$

$$\delta_{zv}^d = \beta_v^d + \delta_{zel}^d,$$

where

($\beta_h^d$)    designates the rear dynamic additional side slip angle,
($\beta_v^d$)    designates the front dynamic additional side slip angle and
($\beta_{zel}^d$)    designates the additional self-steering angle.

4. A control device in accordance with claim 3,
   **characterised in that**
   the rear dynamic additional side slip angle ($\beta_h^d$) corresponds to the Laplace transformation

$$\beta_h^d = (1 + nkh * s) / (1 + nh * s) * \beta^s$$

dependent on the stationary slide slip angle ($\beta^s$), where

s        is the Laplace variable and

nkh, nh   are parameters dependent on the longitudinal velocity ($v_x$).

**5.** A control device in accordance with claim 4,
**characterised in that**
it is possible to determine the parameter (nkh) in accordance with the relationship

$$nkh = v_x * (EG_B + SG_B + df)$$

dependent on the basic values ($EG_B$, $SG_B$) of the self-steering gradient and the slide slip angle gradient and of a transverse acceleration amplification factor (df) which can be predetermined as a reference signal.

**6.** A control device in accordance with claim 4 or 5,
**characterised in that**
it is possible to determine the parameter (nh) in accordance with the relationship

$$nh = v_x * (EG_B + SG_B)$$

dependent on the basic values ($EG_B$, $SG_B$) of the self-steering gradient and the slide slip angle gradient.

**7.** A control device in accordance with one of claims 3 to 6,
**characterised in that**
the front dynamic additional side slip angle ($\beta_v^d$) corresponds to the Laplace transformation

$$\beta_v^d = (1 + nkv * s) / (1 + nv * s) * \beta^s$$

dependent on the stationary slide slip angle ($\beta^s$), where

nkv, nv   are parameters dependent on the longitudinal velocity ($v_x$).

**8.** A control device in accordance with claim 7,
**characterised in that**
it is possible to determine the parameter (nkv) from the relationship

$$nkv = v_x * (SG_B + df)$$

dependent on the basic value ($SG_B$) of the side slip angle gradient and the predeterminable transverse acceleration amplification factor (df).

**9.** A control device in accordance with claim 7,
**characterised in that**
it is possible to determine the parameter (nkv) from the relationship

$$nkv = v_x * (EG_B + SG_B + df)$$

dependent on the basic values ($EG_B$, $SG_B$) of the self-steering gradient and the side slip angle gradient and of the predeterminable transverse acceleration amplification factor (df).

**10.** A control device in accordance with one of claims 7 to 9,
**characterised in that**
it is possible to determine the parameter (nv) from the relationship

$$nv = v_x * SG_B$$

dependent on the basic value ($SG_B$) of the side slip angle gradient.

**11.** A control device in accordance with one of claims 5 to 10,
**characterised in that**
the transverse acceleration amplification factor (df) is less than zero in order to reduce transverse acceleration amplification.

**12.** A control device in accordance with one of claims 5 to 10,
**characterised in that**
the transverse acceleration amplification factor (df) is greater than zero in order to avoid a critical drop in transverse acceleration amplification.

**13.** A control device in accordance with one of claims 3 to 12,
**characterised in that**
the dynamic additional self-steering angle ($\delta_{zel}{}^d$) corresponds to the relationship

$$\delta_{zel}{}^d = \delta_{Sub} - \delta_1 / il_B$$

using the substitution variable ($\delta_{Sub}$), which follows the Laplace transformation

$$\delta_{Sub} = \frac{(s^2/\omega_{0B}{}^2 + 2*D_B/\omega_{0B}*s + 1)}{(s^2/\omega_{0Z}{}^2 + 2*D_Z/\omega_{0Z}*s + 1)} * (\delta_1/il_B + \delta_{zel}{}^s)$$

dependent on the stationary additional self-steering angle ($\delta_{zel}{}^d$), where

$\omega_{0B}$    is the known basic value for natural yaw frequency,
$D_B$    is the known basic value for yaw damping,
$\omega_{0Z}$    is the target value to be set for natural yaw frequency and
$D_Z$    is the target value to be set for yaw damping.

**14.** A control device in accordance with claim 13,
**characterised in that**
it is possible to determine the basic values ($\omega_{OB}$, $D_B$) for natural yaw frequency and yaw damping from the relationships

$$\omega_{OB} = a + b/v_x{}^2$$

$$D = c/(v_x * \omega_{OB}),$$

a, b and c being parameters to be determined from natural yaw frequency measurement curves.

**Revendications**

**1.** Dispositif de commande pour influencer la dynamique de conduite d'un véhicule à quatre roues, dans lequel la vitesse longitudinale ($v_x$) du véhicule et l'angle de braquage ($\delta_1$) peuvent être acheminés comme signaux d'entrée au dispositif de commande (2) et dans lequel peuvent être engendrés des signaux de commande qui peuvent être acheminés à des dispositifs de positionnement (9) pour le réglage des roues du véhicule (3, 4, 5, 6),
    **caractérisé en ce que**
    pour le réglage d'un comportement de conduite désiré, des valeurs cibles pour la démultiplication de la direction ($il_Z$), le gradient d'autovirage ($EG_Z$) et le gradient d'angle de dérive ($SG_Z$) peuvent être spécifiées comme signaux de consigne,

**en ce que** l'accélération transversale ($a_Y$) du véhicule correspond à la relation :

$$a_Y = \delta_1/il_Z * v_x^2 / (v_x^2 * EG_Z + lr),$$

dans laquelle lr désigne l'empattement,

**en ce qu'**un angle de dérive stationnaire supplémentaire ($\beta^s$) correspond à la relation :

$$\beta^s = a_Y * (SG_B - SG_Z)$$

dans laquelle $SG_B$ désigne une valeur de base connue du gradient de l'angle de dérive,

et **en ce que** les angles stationnaires de pincement supplémentaire ($\delta_{zh}^s$, $\delta_{zv}^s$) à l'arrière et à l'avant correspondent aux relations :

$$\delta_{zh}^s = \beta^s$$

$$\delta_{zv}^s = \beta^s + \delta_{zel}^s$$

avec l'angle d'autovirage supplémentaire :

$$\delta_{zel}^s = \delta_1/il_Z * ((v_x^2 * EG_B + lr) / (v_x^2 * EG_Z + lr)) - \delta_1/il_B$$

relation dans laquelle $il_B$ désigne une valeur de base connue de la démultiplication de la direction et $EG_B$ une valeur de base connue du gradient d'autovirage,

sachant que les signaux de commande pouvant être acheminés aux dispositifs de positionnement (9) représentent les angles de pincement stationnaires supplémentaires ($\delta_{zh}^s$, $\delta_{zv}^s$).

2. Dispositif de commande selon la revendication 1,
**caractérisé en ce que**
pour le réglage d'un comportement dynamique de conduite désiré, des signaux de commande peuvent être engendrés qui représentent un angle de pincement supplémentaire dynamisé ($\delta_{zh}^d$, $\delta_{zv}^d$) à l'arrière et à l'avant.

3. Dispositif de commande selon la revendication 2,
**caractérisé en ce que**
les angles de pincement supplémentaires dynamisés ($\delta_{zh}^d$, $\delta_{zv}^d$) à l'arrière et à l'avant correspondent aux relations :

$$\delta_{zh}^d = \beta_h^d$$

$$\delta_{zv}^d = \beta_v^d + \delta_{zel}^d$$

dans lesquelles
$\beta_h^d$ désigne l'angle dynamique supplémentaire de dérive arrière
$\beta_v^d$ désigne l'angle dynamique supplémentaire de dérive avant et
$\delta_{zel}^d$ désigne l'angle dynamique supplémentaire d'autovirage.

4. Dispositif de commande selon la revendication 3,
**caractérisé en ce que**
l'angle dynamique supplémentaire de dérive arrière ($\beta_h^d$) peut être déterminé conformément à la transformation de Laplace

**12**

$$\beta_h{}^d = (1 + nkh * s) / (1 + nh * s) * \beta^s$$

en fonction de l'angle stationnaire supplémentaire de dérive ($\beta^s$) où

s est la variable de Laplace et
nkh, nh sont des paramètres dépendant de la vitesse longitudinale $v_x$.

5. Dispositif de commande selon la revendication 4,
   **caractérisé en ce que**
   le paramètre nkh peut être déterminé conformément à la relation :

$$nkh = v_x * (EG_B + SG_B + df)$$

en fonction des valeurs de base ($EG_B$, $SG_B$) du gradient d'autovirage et du gradient de l'angle de dérive, et d'un facteur d'amplification de l'accélération transversale (df) pouvant être spécifié comme signal de consigne.

6. Dispositif de commande selon la revendication 4 ou 5,
   **caractérisé en ce que**
   le paramètre nh peut être déterminé conformément à la relation :

$$nh = v_x * (EG_B + SG_B)$$

en fonction des valeurs de base ($EG_B$, $SG_B$) du gradient d'autovirage et du gradient de l'angle de dérive.

7. Dispositif de commande selon l'une quelconque des revendications 3 à 6,
   **caractérisé en ce que**
   l'angle dynamique supplémentaire de dérive ($\beta_v{}^d$) avant correspond en fonction de l'angle stationnaire supplémentaire de dérive ($\beta^s$) à la transformation de Laplace :

$$\beta_v{}^d = (1 + nkv * s) / (1 + nv * s) * \beta^s$$

dans laquelle
nkv, nv sont des paramètres fonctions de la vitesse longitudinale $v_x$.

8. Dispositif de commande selon la revendication 7,
   **caractérisé en ce que**
   le paramètre nkv peut être déterminé à partir de la relation :

$$nkv = v_x * (SG_B + df)$$

en fonction de la valeur de base ($SG_B$) du gradient de l'angle de dérive et du facteur d'amplification spécifiable de l'accélération transversale (df).

9. Dispositif de commande selon la revendication 7,
   **caractérisé en ce que**
   le paramètre nkv peut être déterminé à partir de la relation :

$$nkv = v_x * (EG_B + SG_B + df)$$

en fonction des valeurs de base ($EG_B$, $SG_B$) du gradient d'autovirage et du gradient de l'angle de dérive, et du facteur d'amplification spécifiable de l'accélération transversale (df).

**10.** Dispositif de commande selon l'une quelconque des revendications 7 à 9,
**caractérisé en ce que**
le paramètre nv peut être déterminé à partir de la relation :

$$nv = v_x * SG_B$$

en fonction de la valeur de base ($SG_B$) du gradient de l'angle de dérive.

**11.** Dispositif de commande selon l'une quelconque des revendications 5 à 10,
**caractérisé en ce que**
le facteur d'amplification de l'accélération transversale (df) est inférieur à zéro pour l'abaissement de l'amplification de l'accélération transversale.

**12.** Dispositif de commande selon l'une quelconque des revendications 5 à 10,
**caractérisé en ce que**
le facteur d'amplification de l'accélération transversale (df) est supérieur à zéro pour éviter un abaissement critique de l'amplification de l'accélération transversale.

**13.** Dispositif de commande selon l'une quelconque des revendications 3 à 12,
**caractérisé en ce que**
l'angle supplémentaire dynamique d'autovirage $\delta_{zel}{}^d$ correspond à la relation :

$$\delta_{zel}{}^d = \delta_{Sub} - \delta_1 / il_B$$

moyennant l'utilisation de la variable de substitution $\delta_{Sub}$, laquelle suit la transformation de Laplace :

$$\delta_{Sub} = \frac{(s^2/\omega_{0B}{}^2 + 2*D_B/\omega_{0B}*s + 1)}{(s^2/\omega_{0Z}{}^2 + 2*D_Z/\omega_{0Z}*s + 1)} * (\delta_1/il_B + \delta_{zel}{}^s)$$

en fonction de l'angle supplémentaire stationnaire d'autovirage ($\delta_{zel}{}^s$), dans laquelle

$\omega_{0B}$    désigne la valeur de base connue pour la fréquence propre de lacet
$D_B$    désigne la valeur de base connue pour l'amortissement de lacet
$\omega_{0Z}$    désigne la valeur cible à régler pour la fréquence propre de lacet
$D_Z$    désigne la valeur cible à régler pour l'amortissement de lacet.

**14.** Dispositif de commande selon la revendication 13,
**caractérisé en ce que**
les valeurs de base ($\omega_{0B}$, $D_B$) pour la fréquence propre de lacet et pour l'amortissement de lacet peuvent être déterminées à partir des relations :

$$\omega_{0B} = a + b/v_x{}^2$$

$$D = c/(v_x * \omega_{0B})$$

dans lesquelles a, b et c sont des paramètres qui peuvent être déterminés à partir de courbes de mesure de la fréquence propre de lacet.

Fig. 1

Fig. 2